# EUROPÄISCHE PATENTSCHRIFT

(11) **EP 3 948 204 B1**
(45) Veröffentlichungstag und Bekanntmachung des Hinweises auf die Patenterteilung: **10.07.2024**
(21) Anmeldenummer: 20711930.6
(22) Anmeldetag: 17.03.2020
(51) Int. Cl.: G01M 9/04

(54) **VORRICHTUNG UND VERFAHREN FÜR DIE DEMONTAGE/REMONTAGE VON ROTORLAGERN EINES GEBLÄSES EINES WINDKANALS**
DEVICE AND METHOD FOR MOUNTING/REMOUNTING ROTOR BEARINGS OF A BLOWER OF A WIND TUNNEL
DISPOSITIF ET PROCÉDÉ DE DÉMONTAGE/REMONTAGE DE PALIERS DE ROTOR D'UNE SOUFFLANTE DE TUNNEL AÉRODYNAMIQUE

(30) Priorität: 25.03.2019 DE 102019107610
(43) Veröffentlichungstag der Anmeldung: 09.02.2022
(73) Patentinhaber: S. Bleyer GmbH, 73614 Schorndorf (DE); Wenger, Rudolf, 9321 Kappel am Krappfeld (AT)
(72) Erfinder: BORMANN, Jens, 64319 Pfungstadt (DE); BLEYER, Stefan, 73614 Schorndorf (DE); WENGER, Rudolf, 73337 Bad Ueberkingen (DE); WENGER, Rudolf, 9321 Kappel am Krappfeld (AT)
(74) Vertreter: Witte, Weller & Partner Patentanwälte mbB
(86) Internationale Anmeldenummer: PCT/EP2020/057196
(87) Internationale Veröffentlichungsnummer: WO 2020/193266

(56) Entgegenhaltungen:
- EP-B1- 2 655 240
- CN-B- 103 076 152
- US-A- 5 627 311

## Beschreibung

Die Erfindung betrifft ein Verfahren sowie eine Vorrichtung zur Demontage/Remontage von Rotorlagern eines Gebläses eines Windkanals an Ort und Stelle des Gebläses innerhalb eines Kanalgehäuses des Windkanals, wobei das Gebläse eine Rotorachse und saugseitig eine Laufradnabe aufweist.

Windkanäle sind allgemein durch Benutzung bekannt. Ein Windkanal dient dazu, die aerodynamischen Eigenschaften von Objekten zu untersuchen und zu vermessen. Insbesondere werden Windkanäle für aerodynamische Untersuchungen von Kraftfahrzeugen und Flugzeugen verwendet. Windkanäle weisen ein oder mehrere Gebläse auf, die die Luftströmung erzeugen. Gebläse von Windkanälen für die aerodynamische Untersuchung von Kraftfahrzeugen, wie Kleintransportern, Bussen, aber auch PKWs, können sehr großbauend sein und besitzen entsprechend ein sehr hohes Gewicht. Der Durchmesser des Gebläses kann mehrere Meter betragen.

Nach einer längeren Betriebsdauer muss das Gebläse eines Windkanals einer intensiven Wartung unterzogen werden. Dabei ist beispielsweise auch ein Tausch der Rotorlager vorgesehen. Um die Rotorlager für den Austausch zugänglich zu machen, muss unter anderem die saugseitige Laufradnabe vom Motor demontiert werden. Es ist durch Benutzung bekannt, dass die Demontage und Remontage der Rotorlager bislang nicht an Ort und Stelle des Gebläses innerhalb des Kanalgehäuses durchgeführt wird. Für den Rotorlagertausch wird bislang das Dach des Gebäudes, in dem sich der Windkanal befindet, geöffnet und der Windkanal im Bereich des Gebläses zerlegt, um über die Öffnung im Dach das komplette Gebläse mittels eines Krans aus dem Gebäude herauszuheben. Nach erfolgten Wartungsarbeiten am Gebläse in einer externen Werkstatt wird das Gebläse anschließend wieder über das Dach des Gebäudes in den Windkanal zurück verbracht und letzterer wieder zusammengesetzt. Es handelt sich hierbei somit um das gleiche Vorgehen wie bei der Erstmontage des Gebläses im Windkanal. Die vorstehend beschriebene Vorgehensweise bei der Wartung des Gebläses bedeutet wegen des Stellen eines Krans, des Öffnen des Gebäudedaches und das Zerlegen des Windkanals einen erheblichen Aufwand. Darüberhinaus bedingt diese Vorgehensweise eine zeitlich lange Unterbrechung der Nutzung des Windkanals.

Eine Demontage und entsprechend Remontage der Rotorlager im Windkanal selbst ist daher wünschenswert. Dies ist jedoch mit dem Problem behaftet, dass insbesondere die Laufradnabe des Gebläses bei größeren Gebläsen ein Gewicht von mehreren Tonnen aufweisen kann. Ein Aufständern der Laufradnabe innerhalb des Kanalgehäuses ist bei großen Gebläsen wegen der nicht ausreichenden Tragfähigkeit des Kanalgehäuses, in dem sich das Gebläse befindet, nicht möglich.

CN 103 076 152 B offenbart eine Vorrichtung zum Einstellen der Orientierung und Position eines Modells mit vier Freiheitsgraden zur Simulation einer Brennstoffzufuhr zu dem Modell in einem Überschall-Windkanal.

US 5 627 311 A offenbart einen transportierbaren dreidimensionalen Kalibrationswindkanal.

EP 2 655 240 B1 offenbart eine Transportvorrichtung mit einer Linearführung der Verbindungsmittel.

Der Erfindung liegt die Aufgabe zugrunde, ein Verfahren und eine Vorrichtung der eingangs genannten Arten anzugeben, mit denen eine Demontage und Remontage der Rotorlager eines Gebläses eines Windkanals an Ort und Stelle des Gebläses innerhalb des Kanalgehäuses des Windkanals durchgeführt werden kann.

Zur Lösung der vorstehend genannten Aufgabe wird ein Verfahren gemäß Anspruch 1 und ein Windkanal gemäß Anspruch 15 bereitgestellt.

Mit dem erfindungsgemäßen Verfahren und der erfindungsgemäßen Vorrichtung wird vorteilhaft ein Tausch der Rotorlager des Gebläses, ohne Entnehmen des Gebläses aus dem Windkanal, an Ort und Stelle des Gebläses innerhalb des Kanalgehäuses des Windkanals ermöglicht. Die Verfahrvorrichtung der erfindungsgemäßen Vorrichtung weist hierzu zumindest einen Längsträger auf, der innerhalb des Kanalgehäuses des Windkanals am Ort des Gebläses angeordnet wird, und der mittels eines Stützgestells abgestützt wird. Die Abstützung des zumindest einen Längsträgers erfolgt dabei nicht am Kanalgehäuse, da dieses keine ausreichende Tragkraft zum Tragen der mitunter mehrtonnigen Laufradnabe besitzt. Vielmehr ist bei der erfindungsgemäßen Vorrichtung ein Stützgestell vorhanden, das den zumindest einen Längsträger außerhalb des Kanalgehäuses an einem Fundament abstützt, beispielsweise einem Boden oder einer Decke des Gebäuderaumes, in dem sich das Kanalgehäuse mit dem Gebläse befindet. Das Stützgestell erstreckt sich hierzu von dem zumindest einen Längsträger durch eine Wand des Kanalgehäuses hindurch in den Außenraum des Kanalgehäuses, um sich an dem Fundament außerhalb des Kanalgehäuses abzustützen. Das Fundament des Raumes, in dem sich der Windkanal befindet, weist die entsprechende Tragfähigkeit auf, da dieses Fundament nach Bauvorschrift dazu ausgelegt ist, den Windkanal im Bereich des Rotors zu tragen.

Der zumindest eine Längsträger ist dazu ausgebildet und wird so angeordnet, dass, nach Lösen der Laufradnabe vom Motor des Gebläses, die Laufradnabe in Flucht der Rotorachse entlang des zumindest einen Längsträgers verfahren werden kann, um die Laufradnabe vom Motor abzuziehen. "In Flucht der Rotorachse" bedeutet hier, dass die Laufradnabe an dem zumindest einen Längsträger so aufgenommen ist, dass es vorzugsweise zu keinem Achsenversatz zwischen der Laufradnabenachse und der Motorachse kommt, wenn die Laufradnabe vom Motor gelöst wird und auf dem zumindest einen Längsträger verfahren wird. Hierdurch wird vorteilhafterweise gewährleistet, dass für die Remontage der Laufradnabe die Laufradnabe lediglich entlang des zumindest einen Längsträgers zurückverfahren muss, weil die Laufradnabenachse bereits mit der Motorachse fluchtet. Dies ist insbesondere vorteilhaft, wenn die Laufradnabe ein hohes Gewicht von beispielsweise mehreren Tonnen besitzt und eine Korrektur einer Fehlausrichtung der Laufradnabe zum Motor äußerst schwierig, wenn nicht sogar unmöglich ist. Zum Verfahren der Laufradnabe entlang des zumindest einen Längsträgers ist zumindest ein Lauforgan vorgesehen, das an der Laufradnabe befestigt ist oder wird, und das an dem zumindest einen Längsträger in dessen Längsrichtung verfahrbar ist, der selbst ortsfest bleibt. Der zumindest eine Längsträger weist beispielsweise eine Länge von 1 bis 3 m auf, so dass ein für den Zugang zu den auszutauschenden Lagern ausreichender Verfahrweg gegeben ist.

Der zumindest eine Längsträger wird insbesondere bei großen Gebläsen und entsprechend schweren Laufradnaben vorzugsweise unterhalb der Laufradnabe angeordnet, die somit in dieser Ausgestaltung auf dem zumindest einen Längsträger über das zumindest eine Lauforgan aufliegt. In anderen Ausgestaltungen, die für kleinere Gebläse verwendet werden kann, kann der zumindest eine Längsträger innerhalb des Kanalgehäuses oberhalb der Laufradnabe angeordnet werden, so dass die Laufradnabe in diesem Fall an dem zumindest einen Längsträger hängt und der Längsträger außerhalb des Kanalgehäuses an dem Fundament abgestützt wird.

Weitere Ausgestaltungen der vorstehend genannten Ausführungsformen werden nachfolgend beschrieben.

In einer Ausgestaltung kann die Verfahrvorrichtung eine Mehrzahl an Längsträgern aufweisen, die horizontal innerhalb des Kanalgehäuses unter der Laufradnabe angeordnet werden, wobei die Mehrzahl an Längsträgern zur entlang der Längsträger verfahrbaren Aufnahme der Laufradnabe ausgebildet sind, wobei den Längsträgern jeweils zumindest ein Lauforgan zugeordnet ist.

Diese Ausgestaltung der Verfahrvorrichtung mit einer Mehrzahl an Längsträgern eignet sich insbesondere bei groß dimensionierten Gebläsen mit einem entsprechend hohen Gewicht der Laufradnabe, da die Last der Laufradnabe auf mehrere Längsträger verteilt werden kann. Außerdem ermöglicht diese Ausgestaltung eine Sicherung gegen ein seitliches Kippen der Laufradnabe. Hierzu sind die Längsträger vorzugsweise in Umfangsrichtung der Laufradnabe verteilten angeordnet.

Die mehreren Längsträger können dabei in Umfangsrichtung symmetrisch, insbesondere gleichwinklig beabstandet, angeordnet werden.

Die Verfahrvorrichtung kann beispielsweise drei Längsträger aufweisen, von denen ein mittlerer Längsträger mittig unter der Rotorachse des Gebläses und die beiden anderen beidseits des mittleren Längsträgers angeordnet werden.

Die beiden äußeren Längsträger können von dem mittleren Längsträger um einen Winkel von 10° bis 30° in Umfangsrichtung um die Rotorachse gesehen beabstandet angeordnet werden.

Das Stützgestell kann eine Mehrzahl an Vertikalträgern zur Aufnahme des oder der Längsträger aufweisen, wobei sich die Vertikalträger nach unten durch die Wand des Kanalgehäuses hindurch erstrecken.

Die Vertikalträger dienen dabei der Abstützung des oder der Längsträger am Fundament. Die Vertikalträger verteilen die Last am Fundament und reduzieren somit die Flächenlast am Fundament. Die Anzahl an Vertikalträgern pro Längsträger wird sich dabei an der zu tragenden Last und der zu erreichenden Stabilität des Stützgestells orientieren. Beispielsweise können entlang eines Längsträgers zwei bis fünf Vertikalträger angeordnet werden, um eine entsprechend stabile Abstützung des Längsträgers und eine Verteilung der Last am Fundament zu erreichen.

Jeder Vertikalträger kann in eine Mehrzahl von Vertikalträgern unterteilt sein. So ist in einer Ausgestaltung vorgesehen, dass die Vertikalträger eine Mehrzahl an ersten Vertikalträgern aufweisen, wobei das Stützgestell eine Mehrzahl an horizontalen Querträgern zur Anordnung innerhalb des Kanalgehäuses quer zur Längsrichtung der Längsträger und zur Aufnahme der ersten Vertikalträger aufweist, und wobei die Vertikalträger eine Mehrzahl an zweiten Vertikalträgern aufweisen, die sich von den Querträgern durch das Kanalgehäuse hindurch erstrecken.

Die Aufteilung eines oder mehrerer Vertikalträger in eine Mehrzahl von Vertikalträgerabschnitten unter Zwischenanordnung von Querträgern erhöht vorteilhafterweise die Stabilität und Tragkraft des Stützgestells weiter.

Entsprechend ist in einer weiteren Ausgestaltung vorgesehen, dass das Stützgestell eine Mehrzahl an weiteren horizontalen Querträgern aufweist, wobei sich die Mehrzahl an zweiten Vertikalträgern nach unten zu den weiteren Querträgern erstrecken, und wobei die Vertikalträger eine Mehrzahl an dritten Vertikalträgern aufweisen, die sich von den weiteren Querträgern nach unten erstrecken und auf dem Fundament abstützen.

In dieser Ausgestaltung sind die Vertikalträger entsprechend in drei Vertikalträgerabschnitte unterteilt, zwischen denen jeweils eine Anordnung von Querträgern angeordnet wird.

Vorzugsweise sind die Vertikalträger höhenverstellbar, um Unebenheiten des Fundamentes auszugleichen. Die Höhenverstellbarkeit der Vertikalträger kann am Fuß des jeweiligen Vertikalträgers vorgesehen sein, der sich auf dem Fundament abstützt.

Die Vertikalträger und/oder die Querträger können des Weiteren durch Verstrebungen, insbesondere Spannstangen, weiter miteinander verstrebt werden, um die Steifigkeit des Stützgestells noch weiter zu erhöhen.

Eine weitere Lagestabilisierung der Laufradnabe, wenn diese vom Motor gelöst ist, kann durch einen oberhalb der Laufradnabe innerhalb des Kanalgehäuses angeordneten weiteren Längsträger erreicht werden, an dem die Laufradnabe verfahrbar ist, und die ein seitliches Abkippen der Laufradnabe verhindert. An dem weiteren Längsträger kann ein Lauforgan vorhanden sein, das als Laufkatze oder Laufwagen ausgebildet sein kann, die an der Laufradnabe befestigt wird. Das Lauforgan kann insbesondere auch ein Hebezeug aufweisen. Mittels einer Zugvorrichtung, die an dem Lauforgan angreift, kann die Laufradnabe für die Remontage dann zurückverfahren werden.

Zuvor wurden Ausgestaltungen beschrieben, bei denen der zumindest eine Längsträger unterhalb der Laufradnabe angeordnet wird. In einer hierzu alternativen Ausgestaltung kann der zumindest eine Längsträger über der Laufradnabe angeordnet werden, wobei das Stützgestell zumindest einen Vertikalträger zur Aufnahme des zumindest einen Längsträgers aufweist, wobei sich der Vertikalträger nach oben aus dem Kanalgehäuse heraus erstreckt, und wobei das Stützgestell ein Portal zur Aufnahme des Vertikalträgers und zum Abstützen an dem Fundament aufweist.

Diese Ausgestaltung der Verfahrvorrichtung eignet sich für kleinere Gebläse.

In einer weiteren Ausgestaltung gemäß beider der oben beschriebenen Varianten ist eine Lage und/oder Position des zumindest einen Längsträgers justierbar, insbesondere feinjustierbar.

Der oder die Längsträger können somit so justiert werden, dass ein Achsenversatz der Laufradnabe zur Motorachse vermieden wird. Hierdurch wird erreicht, dass die Laufradnabe nach ihrem Lösen vom Motor in Flucht mit der Rotorachse, d.h. ohne eine vertikale Lageänderung vom Motor weg bewegt werden kann. Außerdem können der oder die Längsträger optimal horizontal, d.h. ohne Gefälle positioniert werden. Die Justage des zumindest einen Längsträgers kann über eine justierbare Aufnahme des Längsträgers an dem zumindest einen Vertikalträger des Stützgestells erfolgen. Der oder die Vertikalträger können eine teleskopartige Ausgestaltung mit einem Feintrieb aufweisen. Auch das oder die Lauforgane können justierbar sein, insbesondere in Höhenrichtung, um bei der Aufnahme der Last der Laufradnabe einen vertikalen Versatz zwischen Laufradnabenachse und Motorachse zu vermeiden. Wie bereits erwähnt, ist eine millimetergenaue Ausrichtung zwischen Laufradnabenachse und Motorachse von Vorteil.

Die vorstehend genannte einstellbare Lage und/oder Position des zumindest einen Längsträgers kann eine Neigung, eine Höhe und/oder eine horizontale Lage quer zur Längsrichtung des Längsträgers sein.

Das zumindest eine Lauforgan kann eine Montageanschlussstelle aufweisen, die an eine Montageanschlussstelle für ein Rotorblatt des Gebläses angepasst ist. Hierbei können demnach die an der Laufradnabe für die Rotorblätter bereits vorgesehenen Montageanschlusstellen auch für die Befestigung zumindest eines oder mehrerer der Lauforgane verwendet werden, was den Aufwand für die Montage der Laufrolle(n) vorteilhaft verringert. Die Montageanschlussstellen der Rotorblätter stellen jedoch nicht alleinige Befestigungsstellen der Lauforgane dar, d.h. letztere können auch an anderen Stellen an der Laufradnabe befestigt werden.

Das oder die Lauforgane werden vorzugsweise im lastfreien Zustand an der Laufradnabe befestigt. Nach Aufbauen des Stützgestells und Montage des oder der Längsträger einschließlich deren exakter Justage kann die Laufradnabe vom Motorgelöst werden. Beim Lösen der Laufradnabe vom Motor nimmt die Verfahrvorrichtung einschließlich des Stützgestells sukzessive die Last der Laufradnabe auf, beispielsweise indem die Last der Laufradnabe von einem Hebezeug auf das bzw. die Lauforgane übergeben wird. Bei der sukzessiven Lastübergabe wird das Lauforgan oder werden die Lauforgane in ihrer Höhenlage sukzessive nachjustiert, so dass eine vertikale Lageänderung der Laufradnabe bei der Lastübergabe auf die Lauforgane und damit die Längsträger vermieden wird.

Das zumindest eine Lauforgan kann zumindest eine Laufrolle, insbesondere eine Panzerrolle, oder eine Laufkatze oder einen Laufwagen aufweisen. Eine Panzerrolle eignet sich insbesondere, wenn der oder die Längsträger unterhalb der Laufradnabe angeordnet sind, so dass sich die Laufradnabe über die für hohe Tragkräfte ausgelegten Panzerrollen auf den Längsträgern abstützen kann. Eine Laufkatze oder ein Laufwagen eignet sich in dem Fall, dass der zumindest eine Längsträger oberhalb der Laufradnabe angeordnet ist, so dass die Laufradnabe an dem zumindest einen Längsträger aufgehängt ist.

Die erfindungsgemäße Vorrichtung kann des Weiteren eine Zugvorrichtung aufweisen, die an der Laufradnabe angreift, um die Laufradnabe für die Demontage vom Motor entlang des oder der Längsträger zu verfahren.

In einer Ausgestaltung des Verfahrens werden in das Kanalgehäuse eine oder mehrere Öffnungen für die Durchführung des Stützgestells eingebracht. Diese Öffnungen können einen Durchmesser von 10 cm oder weniger aufweisen, und werden nach erfolgter Remontage der Laufradnabe wieder fluiddicht verschlossen.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:
- Figur 1: eine Prinzipskizze eines Windkanals;
- Figur 2: eine perspektivische Darstellung eines Gebläses eines Windkanals mit einem darunter befindlichen Fundament, wobei ein Kanalgehäuse des Windkanals im Bereich des Gebläses aufgebrochen gezeigt ist;
- Figur 3: eine perspektivische Darstellung des Gebläses mit einer Vorrichtung für die Demontage/Remontage an Ort und Stelle des Gebläses innerhalb des Kanalgehäuses des Windkanals, wobei das Fundament in Fig. 2 weggelassen wurde;
- Figur 4: eine weitere perspektivische Darstellung des Gebläses mit der Vorrichtung für die Demontage/Remontage, wobei wiederum das Fundament in Fig. 2 weggelassen wurde;
- Figur 5: eine weitere perspektivische Darstellung des Gebläses im Bereich der Laufradnabe mit der Vorrichtung für die Demontage/Remontage, wobei die Laufradnabe vom Motor des Gebläses weg bewegt wurde;
- Figur 6: eine perspektivische Detailansicht der Vorrichtung für die Demontage/Remontage;
- Figur 7: eine perspektivische Darstellung der Laufradnabe mit daran befestigten Lauforgangen; und
- Figur 8: ein weiteres Gebläse eines Windkanals mit einer Vorrichtung für die Demontage/Remontage an Ort und Stelle des Gebläses innerhalb des Kanalgehäuses des Windkanals.

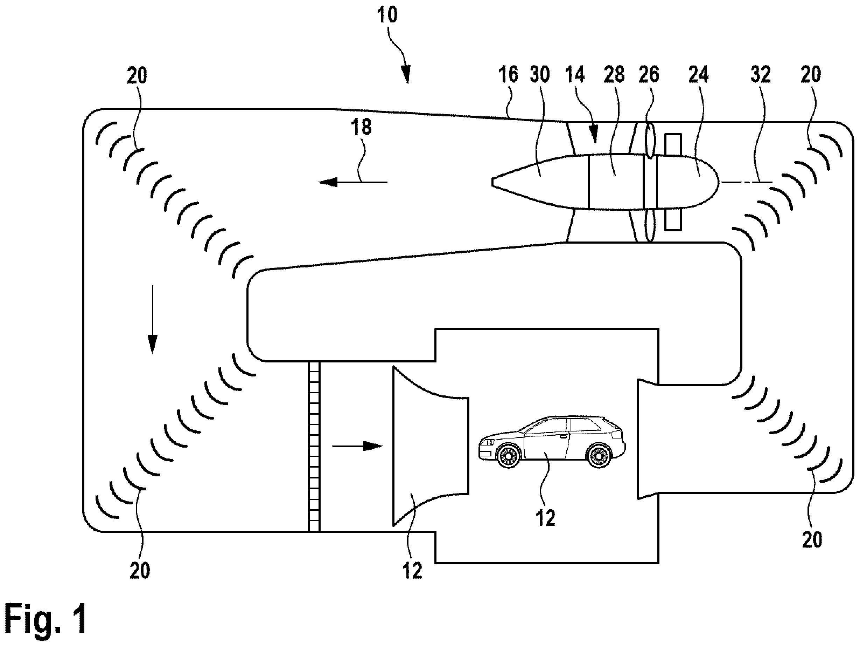

Fig. 1 zeigt schematisch einen mit dem allgemeinen Bezugszeichen 10 versehenen Windkanal zur Untersuchung aerodynamischer und/oder aeroakustischer Eigenschaften eines Objekts 12, das hier als PKW gezeigt ist. Der Windkanal 10 ist hier als geschlossener Umlaufwindkanal gezeigt. Wesentlicher Bestandteil des Windkanals 10 ist ein Gebläse 14, das in einem Kanalgehäuse 16 des Windkanals 10 angeordnet ist. Das Gebläse 14 erzeugt eine Luftströmung 18 innerhalb des Kanalgehäuses 16. Die Luftströmung wird über Umlenkschaufeln 20 umgelenkt und über eine Düse 22 auf das zu untersuchende Objekt 12 gerichtet, und gelangt über weitere Umlenkschaufeln 20 wieder zu dem Gebläse 14. Das Gebläse 14 weist eine saugseitige Laufradnabe 24 mit daran befestigten Rotorblättern 26, einen Motor 28 und ein druckseitiges Heck 30 auf. Eine Rotorachse, um die die Rotorblätter 26 während des Betriebs des Gebläses 14 rotieren, ist mit dem Bezugszeichen 32 versehen.

Für den Rotorlagertausch am Gebläse 14 ist es erforderlich, das Heck 30 und die Laufradnabe 24 vom Motor zu demontieren.

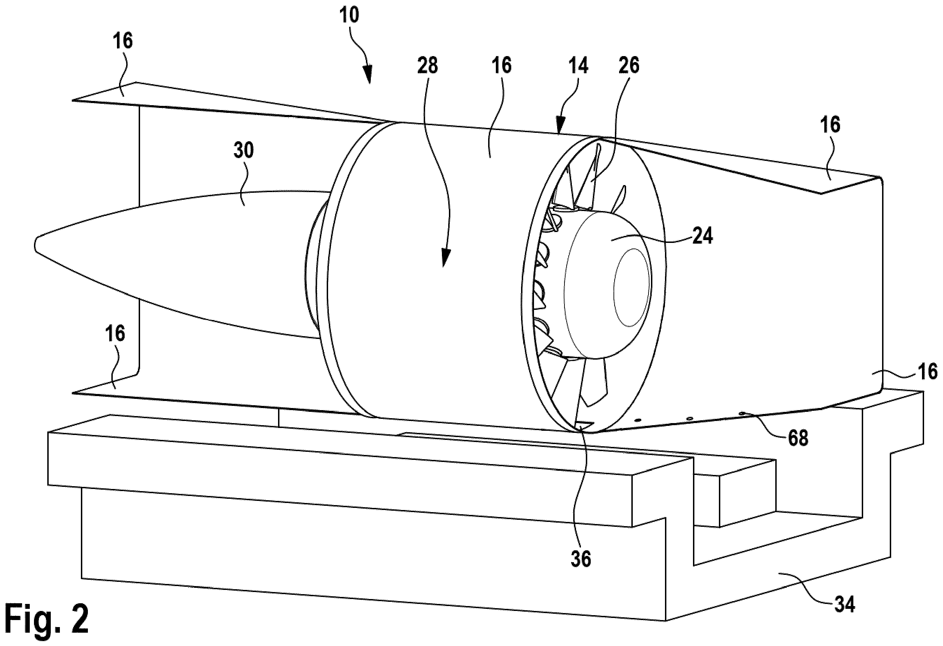

Fig. 2 zeigt einen Ausschnitt des Windkanals 10 im Bereich des Gebläses 14, wobei das Kanalgehäuse 16 in Fig. 2 aufgebrochen gezeigt ist. Es versteht sich, dass das Kanalgehäuse 16 das Gebläse 14 vollumfänglich umgibt. Fig. 2 zeigt des Weiteren ein Fundament 34 des Gebäudes bzw. Gebäuderaumes, indem sich der Abschnitt des Windkanals 10 mit dem Gebläse 14 befindet. Das Fundament 34 befindet sich außerhalb des Kanalgehäuses 16. Über hier nicht näher dargestellte Einrichtungen ist der Abschnitt des Windkanals 10 mit dem Gebläse 14 auf dem Fundament 34 abgestützt. In Fig. 2 sind die Rotorblätter 26 noch an der Laufradnabe 24 montiert. Für den Rotorlagertausch werden die Rotorblätter 26 zunächst von der Laufradnabe 24 abgebaut. Die Rotorblätter 26 können dabei durch eine Rotorblattentnahmeöffnung 26 im Kanalgehäuse 16 entnommen werden.

Die Laufradnabe 24 muss für den Rotorlagertausch ebenfalls vom Motor 28 des Gebläses abgenommen werden, um Zugang zu den Lagerschilden zu erhalten. Bei großen Gebläsen kann die Laufradnabe 24 mehrere Tonnen Gewicht aufweisen. Ein Aufständern der Laufradnabe 24 innerhalb des Kanalgehäuses 16 ist wegen der nicht ausreichenden Tragfähigkeit der Wand des Kanalgehäuses 16 nicht möglich.

Nachfolgend werden mit Bezug auf die weiteren Figuren Vorrichtungen zur Demontage/ Remontage an Ort und Stelle des Gebläses 14 innerhalb des Kanalgehäuses 16 des Windkanals 10 beschrieben, um einen Rotorlagertausch im Kanalgehäuse 16 zu ermöglichen.

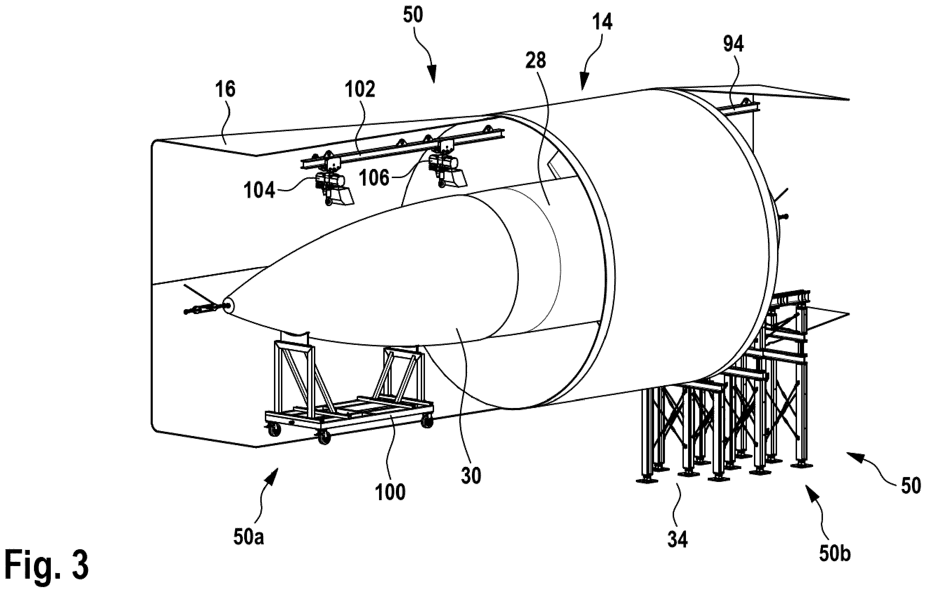

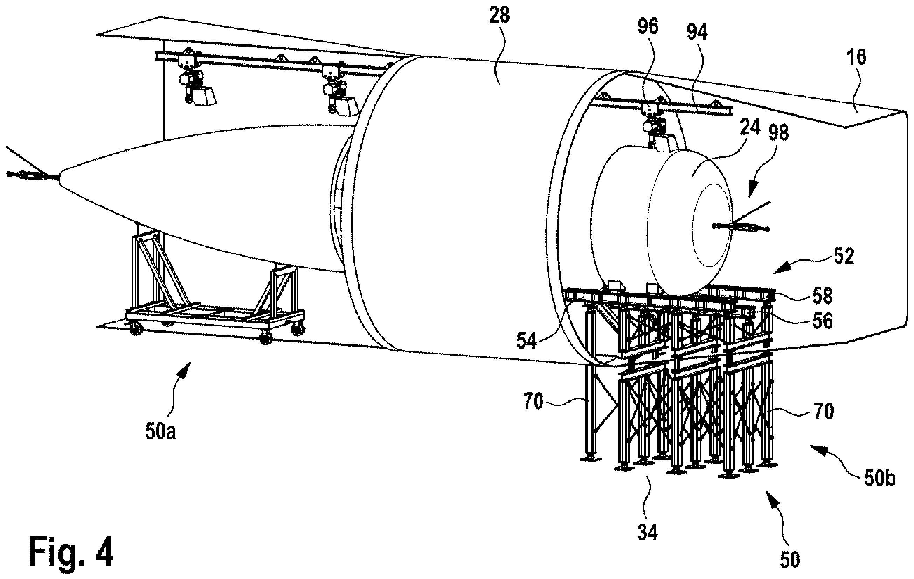

In Fig. 3 und 4 ist eine mit dem allgemeinen Bezugszeichen 50 versehene Vorrichtung für die Demontage/Remontage von Rotorlagern des Gebläses 14 an Ort und Stelle des Gebläses 14 innerhalb des Kanalgehäuses 16 gezeigt. Die Vorrichtung 50 weist Komponenten 50a für die Demontage/Remontage des Hecks 30 und Komponenten 50b für die Demontage/Remontage der Laufradnabe 24 auf.

Zunächst werden mit Bezug auf Fig. 4 bis 7 die Komponenten 50b für die Demontage/Remontage der Laufradnabe 24 beschrieben. In Fig. 4 bis 7 sind die Rotorblätter von der Laufradnabe 24 bereits abgenommen worden.

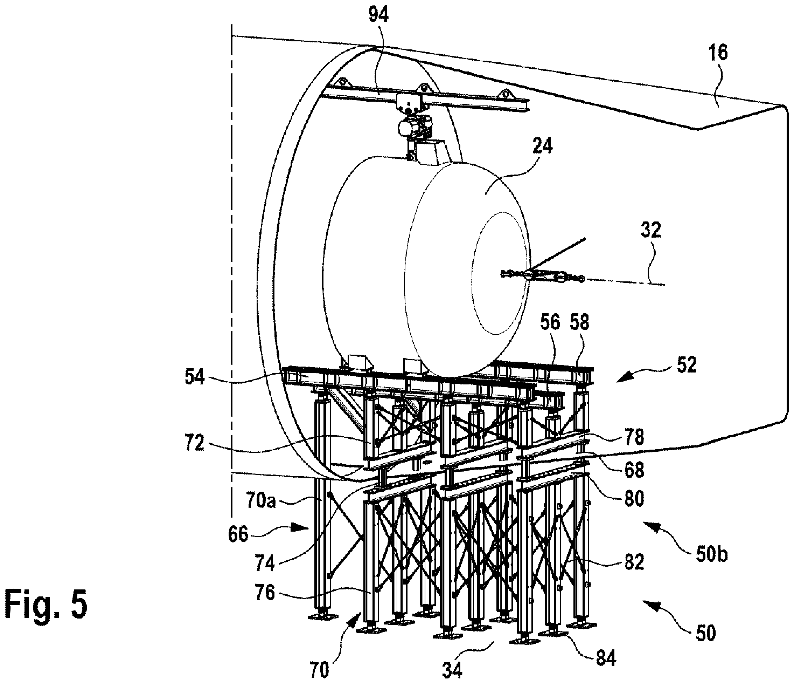

Die Komponenten 50b der Vorrichtung 50 weisen eine Verfahrvorrichtung 52 auf, die zumindest einen, im gezeigten Ausführungsbeispiel drei Längsträger 54, 56, 58 aufweist. Die Längsträger 54, 56, 58 sind horizontal innerhalb des Kanalgehäuses 16 in Längsrichtung des Kanalgehäuses 16 verlaufend angeordnet und erstrecken sich unter der Laufradnabe 24 entlang dieser. Die Längsträger 54, 56, 58 dienen der Aufnahme der Laufradnabe 24 mittels Lauforganen 60, 62 und 64. Die Längsträger 54, 56, 58 ermöglichen ein Verfahren der Laufradnabe 24 derart, dass beim Verfahren der Laufradnabe 24 entlang der Längsträger 54, 56, 58 die Laufradnabenachse in Flucht mit der Rotorachse 32 (Fig. 5) ist bzw. mit dieser so exakt wie möglich zusammenfällt. Jedem der Längsträger 54, 56, 58 sind ein oder mehrere Lauforgane 60, 62, 64 zugeordnet. Die Lauforgane 60, 62, 64 werden an der Laufradnabe 24 befestigt, wie nachfolgend noch beschrieben wird. Über die Lauforgane 60, 62, 64 ist die Laufradnabe 24 nach ihrem Lösen von dem Motor 28 (Fig. 2) entlang der Längsträger 54, 56, 58 verfahrbar.

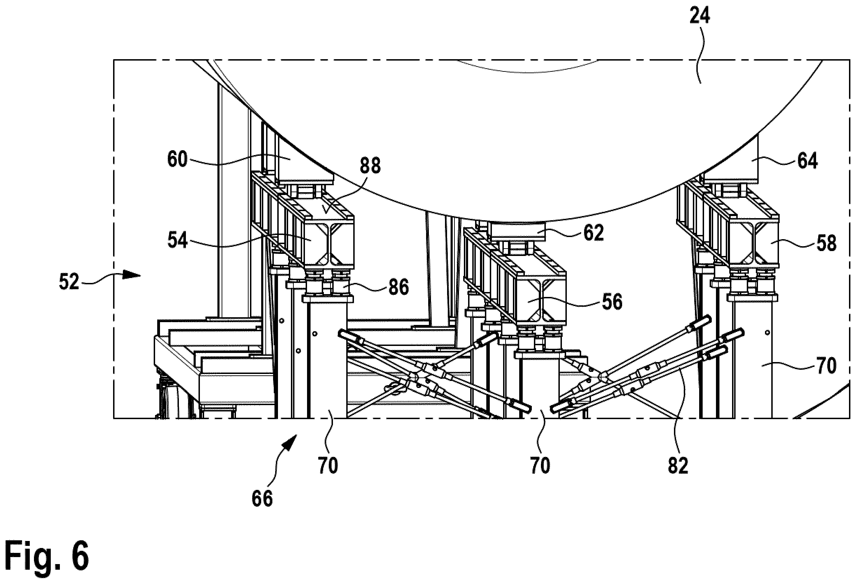

Wie in Fig. 6 gezeigt ist, sind die Längsträger 54, 56, 58 in Umfangsrichtung der Laufradnabe 24 winkel-äquidistant zueinander verteilt angeordnet. Der mittlere Längsträger 56 befindet sich dabei mittig unter der Rotorachse 32, und die au ßenseitigen Längsträger 54, 58 sind parallel zueinander und parallel zu dem mittleren Längsträger 56 beidseits des mittleren Längsträgers 56 angeordnet. Die Längsträger 54, 56, 58 weisen eine Länge im Bereich von 1 m bis 3 m auf, und besitzen beispielsweise eine Länge von 1,5 m bis 2 m.

Die Verfahrvorrichtung 52 weist weiterhin ein Stützgestell 66 auf, das zur Abstützung der Längsträger 54, 56, 58 an dem in Fig. 2 gezeigten Fundament 34 ausgebildet ist. In Fig. 3 bis 5 ist das Fundament 34 aus Gründen der Übersichtlichkeit nur durch das Bezugszeichen 34 repräsentiert.

Das Stützgestell 66 erstreckt sich, wie in Fig. 4 und 5 gezeigt ist, durch die Wand des Kanalgehäuses 16 aus dem Inneren des Kanalgehäuses 16 in den Außenraum des Kanalgehäuses 16, um sich an dem Fundament 34 außerhalb des Kanalgehäuses 16 abzustützen. Für die Durchführung des Stützgestells 66 sind in der Wand des Kanalgehäuses 16 entsprechende Öffnungen 68 (siehe Fig. 2 und 5) eingebracht worden. Die Öffnungen können einen Durchmesser von etwa 10 cm aufweisen.

Das Stützgestell 66 weist eine Mehrzahl an Vertikalträgern 70 zur Aufnahme und Abstützung der Längsträger 54, 56, 58 auf. Die Vertikalträger 70 erstrecken sich dabei durch die zuvor genannten Öffnungen 68 in der Wand des Kanalgehäuses 16. Insgesamt sind in dem Ausführungsbeispiel 10 Vertikalträger 70 gezeigt.

Die Anzahl an Vertikalträgern 70 pro Längsträger richtet sich nach der aufzunehmenden Last und der zu erreichenden Stabilität des Stützgestells 66. In dem gezeigten Ausführungsbeispiel sind den beiden äußeren Längsträgern 54 und 58 jeweils drei Vertikalträger 70 zur Abstützung zugeordnet, und dem mittleren Längsträger 56 sind vier Vertikalträger 70 zugeordnet. Die Vertikalträger 70 für den Längsträger 56 befinden sich wie der Längsträger 56 selbst mittig unter der Rotorachse 32. Der vierte Vertikalträger 70a des mittleren Längsträgers 56 ist durch die Rotorentnahmeöffung 36 (Fig. 2) geführt.

Während es möglich ist, die Vertikalträger 70 von den Längsträgern 54, 56 bzw. 58 bis zum Fundament durchgehend auszugestalten, ist es bevorzugt, wenn zumindest einige der Vertikalträger 70 in ihrer Längsrichtung in erste Vertikalträger 72, zweite Vertikalträger 74 und gegebenenfalls dritte Vertikalträger 76 unterteilt sind. Zwischen den ersten Vertikalträgern 72 und den zweiten Vertikalträgern 74 weist das Stützgestell eine Mehrzahl an ersten horizontalen Querträgern 78 auf, die innerhalb des Kanalgehäuses 16 quer zu den Längsträgern 54, 56, 58 angeordnet sind. Das Stützgestell 66 weist eine Mehrzahl an weiteren horizontalen Querträgern 80 auf, die außerhalb des Kanalgehäuses 16, vorzugsweise unmittelbar unter dem Kanalgehäuse 16, angeordnet werden. Bei dieser Ausgestaltung der Vertikalträger 70 aus mehreren Vertikalträgerabschnitten erstrecken sich die zweiten Vertikalträger 74 durch die Öffnungen 68 in der Wand des Kanalgehäuses 16.

Das Stützgestell 66 ist durch Verstrebungen 82, die beispielsweise als Spannstangen ausgeführt sein können, weiter versteift.

Die Vertikalträger 70 sind vorzugsweise höhenverstellbar, um Unebenheiten oder Niveauunterschiede des Fundaments 34 auszugleichen. Beispielsweise können die Vertikalträger 70 höhenverstellbare Füße 84 aufweisen.

Für eine sichere Funktionsweise der Verfahrvorrichtung 52 ist es wichtig, dass die Längsträger 54, 56, 58 so exakt wie möglich in Waage sind. Außerdem ist es wichtig, dass die Längsträger 54, 56, 58 so exakt wie möglich parallel zu der Rotorachse 32 ausgerichtet sind. Um eine vertikale Lagejustierung der Längsträger 54, 56 und 58 bereitzustellen, sind die Vertikalträger 70 mit feinjustierbaren höhenverstellbaren Aufnahmen 86 ausgestattet, die in Fig. 6 zu sehen sind. Die Aufnahmen 86 können vorzugsweise einen Feintrieb aufweisen, der eine millimetergenaue Höhenjustierung der Längsträger 54, 56 und 58 ermöglicht. Über die Justierung mittels der justierbaren Aufnahmen 86 kann die Höhe sowie die Neigung des jeweiligen Längsträgers 54, 56 und 58 so exakt wie möglich eingestellt werden. Die Neigung sollte 0° bezüglich der Horizontalen betragen. Ebenso werden die Längsträger 54, 56, 58 in seitlicher Richtung exakt justiert, damit sie so exakt wie möglich parallel zur Rotorachse 32 verlaufen.

Die Längsträger 54, 56, 58 können, wie in Fig. 6 zu sehen ist, als Doppel-T-Profile ausgebildet sein, mit weiteren Verstärkungsrippen für eine besonders hohe Tragfähigkeit der Längsträger 54, 56, 58. Eine Oberseite 88 der Längsträger 54, 56, 58 dient als Lauffläche für die Lauforgane 60, 62, 64.

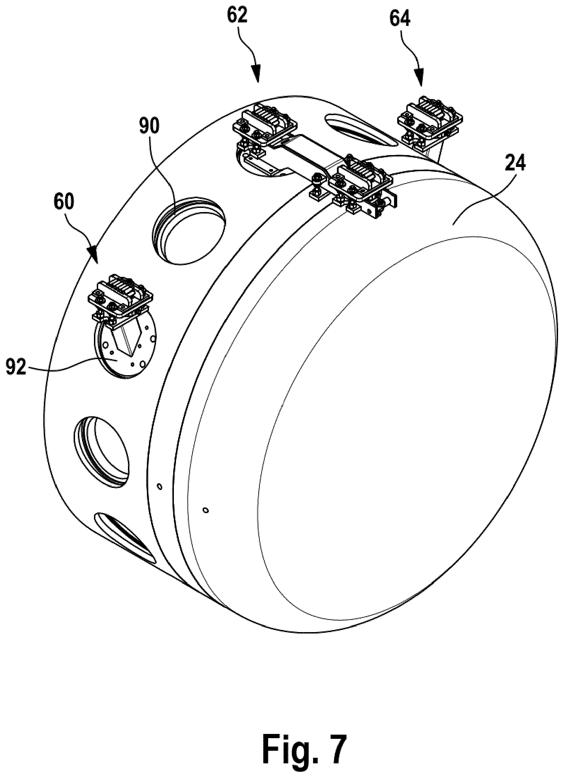

Fig. 7 zeigt die Laufradnabe 24 in Alleinstellung und in gegenüber Fig. 6 um 180° um die Laufradnabenachse gedrehter Orientierung , so dass Einzelheiten der Lauforgane 60, 62, 64 besser zu erkennen sind. In Fig. 7 sind auch die Montageanschlussstellen 90 für die in Fig. 7 bereits abgenommenen Rotorblätter 26 zu sehen. Die Lauforgane 60, 62, 64 weisen vorzugsweise Montageanschlussstellen 92 auf, die an die Montageanschlussstellen 90 für die Rotorblätter angepasst sind und entsprechend in den Montageanschlussstellen 90 an der Laufradnabe 24 befestigt werden können. Die Lauforgane 60, 62, 64 oder weitere Lauforgane können jedoch auch an anderen Stellen an der Laufradnabe befestigt werden.

Die Lauforgane 60, 62, 64 sind vorzugsweise als Panzerrollen ausgebildet. Die Lauforgane 60, 62, 64 sind darüber hinaus fein lagejustierbar, sowohl in vertikaler als auch seitlicher Richtung.

Die Komponenten 50b für die Demontage/Remontage der Laufradnabe 24 können weiterhin einen weiteren Längsträger 94 (siehe Fig. 4 und 5) in der Art eines Krans aufweisen, der oberhalb der Laufradnabe 24 innerhalb des Kanalgehäuses 16 angeordnet werden kann bzw. angeordnet ist. Dem Längsträger 94 ist ein weiteres Lauforgan 96 zugeordnet, das an dem Längsträger 94 verfahrbar ist und an der Laufradnabe 24 festlegbar ist. Das Lauforgan 96 ist hier als Laufkatze oder Laufwagen ausgebildet. Das Lauforgan 96 kann ein Hebezeug aufweisen. Der Längsträger 94 dient zur zusätzlichen seitlichen Stabilisierung der Laufradnabe 24 während der Montagetätigkeiten, und kann außerdem Hebe- und Positionierarbeiten im Kanalgehäuse 16 dienen.

Bei einem Verfahren zum Demontieren der Laufradnabe 24 von dem Motor 28 werden die Komponenten 50b wie zuvor beschrieben und in Fig. 4 bis 6 gezeigt, aufgebaut, nachdem die Rotorblätter 26 bereits demontiert wurden. Zuvor ist gegebenenfalls eine vorhandene Thermoisolierung außerhalb des Kanalgehäuses 16 im Bereich des aufzubauenden Stützgestells 66 zu entfernen. Die Öffnungen 68 werden in das Kanalgehäuse 16 eingebracht oder geöffnet, wenn diese bei einer früheren Wartung bereits eingebracht und anschließend wieder mit einem Deckel druckdicht verschlossen wurden. Die Lauforgane 60, 62, 64 werden, wie in Fig. 7 gezeigt, im lastfreien Zustand an der Laufradnabe 24 befestigt. Nach Aufbauen des Stützgestells 66 und Montage der Längsträger 54, 56, 58 einschließlich deren exakter Justage wie oben beschrieben kann die Laufradnabe 24 vom Motor 28 gelöst werden. Beim Lösen der Laufradnabe 24 vom Motor 28 nimmt die Verfahrvorrichtung 52 einschließlich des Stützgestells 66 sukzessive die Last der Laufradnabe 24 auf, beispielsweise indem die Last der Laufradnabe vom Hebezeug 96 auf die Lauforgane übergeben wird. Bei der sukzessiven Lastübergabe auf die Lauforgane 60, 62, 64 werden diese in ihrer Höhenlage sukzessive nachjustiert, so dass eine vertikale Lageänderung der Laufradnabe 24 bei der Lastübergabe auf die Lauforgane und damit die Längsträger vermieden wird, d.h. die Laufradnabe nicht absackt. Die Niveaubeibehaltung der Laufradnabe sollte millimetergenau sein. Die Laufradnabe 24 kann, wenn die Last vollständig von der Verfahrvorrichtung 52 aufgenommen worden ist, dann entlang der Längsträger 54, 56, 58 von dem Motor 28 weg verfahren werden, so dass Zugang zu den nabenseitigen Lagerschilden gegeben ist. Der Verfahrweg kann etwa 1 bis 2 m betragen. Zum Verfahren kann die Vorrichtung 50 weiterhin eine Zugvorrichtung 98 aufweisen, die beispielsweise in Form eines Flaschenzuges ausgebildet sein kann.

Für das Zurückverfahren der Laufradnabe 24 nach Durchführung der Wartungsarbeiten kann ein entgegengesetzter Zug oder ein Druck auf die Laufradnabe 24 ausgeübt werden, um diese wieder zum Motor 28 hin zu verfahren.

Die Komponenten 50a für die Demontage des Hecks 30 können sich vollständig innerhalb des Kanalgehäuses 16 befinden, da das Heck eines Gebläses wesentlich weniger wiegt als die Laufradnabe. Wie in Fig. 3 gezeigt ist, können die Komponenten 50a einen Verfahrwagen 100 aufweisen, auf dem das Heck 30 nach Lösen vom Motor 28 absetzbar ist. Die Komponenten 50a können weiterhin einen Längsträger 102 aufweisen, der deckenseitig am Kanalgehäuse 16 befestigt sein kann. Der Längsträger 102 kann eine Verlängerung des Längsträgers 94 sein. Der Längsträger 102 weist gemäß Fig. 3 zwei Lauforgane 104, 106 auf, die als Laufkatzen und als Hebezeug für das Heck 30 ausgebildet sein können.

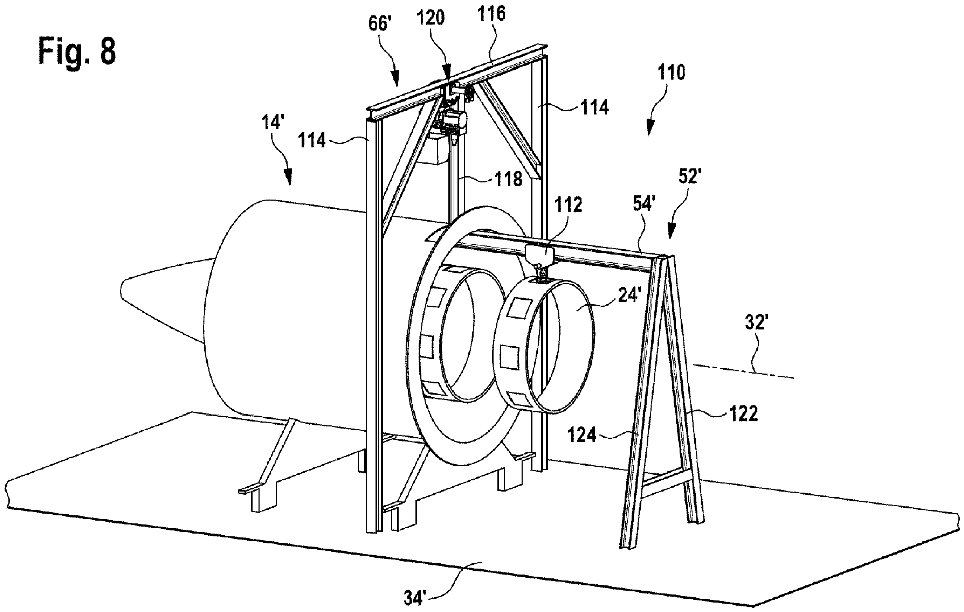

Fig. 8 zeigt ein weiteres Ausführungsbeispiel einer Vorrichtung 110 für die Demontage/ Remontage, insbesondere einer Laufradnabe 24' eines Gebläses 14' innerhalb eines in Fig. 8 nicht gezeigten Kanalgehäuses eines Windkanals. Elemente der Vorrichtung 110, die mit Elementen der Vorrichtung 50 vergleichbar sind, sind mit den gleichen Bezugszeichen versehen, ergänzt durch einen '. Die Vorrichtung 110 eignet sich für kleinere Gebläse eines Windkanals.

Die Vorrichtung 110 weist eine Verfahrvorrichtung 52' auf, die einen Längsträger 54' aufweist, der oberhalb der Laufradnabe 24' angeordnet wird. Die Laufradnabe 24' ist an dem Längsträger 52' über eine Laufkatze 112 entlang des Längsträgers 54' verfahrbar aufgenommen. Der Längsträger 52' ist über ein Stützgestell 66', mit dem der Längsträger 54' verbunden ist, auf einem Fundament 34' außerhalb des Kanalgehäuses abgestützt. Das Stützgestell 66' weist in diesem Ausführungsbeispiel ein Portal auf, das zwei seitliche Vertikalträger 114 und einen Querträger 116 aufweist. Die Vertikalträger 114 und der Querträger 116 können vollständig außerhalb des Kanalgehäuses angeordnet sein. Ein weiterer Vertikalträger 118 des Stützgestells 66' ist einerseits mit dem Längsträger 54' und andererseits mit dem Querträger 116 verbunden. Der Vertikalträger 118 ist dabei durch eine in das Kanalgehäuse eingebrachte Öffnung durch die Wand des Kanalgehäuses nach außen geführt. Der Längsträger 54' ist an seinem dem Vertikalträger 118 gegenüberliegenden Ende mit zwei weiteren Vertikalträgern 122, 124 verbunden, die V-förmig aufgestellt sind. Die Vertikalträger 122, 124 können innerhalb des Kanalgehäuses aufgestellt sein, oder sie können durch entsprechende Öffnungen im Kanalgehäuse aus dem Kanalgehäuse heraus geführt und auf dem Fundament 34' abgestützt sein.

Der Vertikalträger 118 ist über eine Verstelleinrichtung 120 in Längsrichtung des Querträgers 116 und in Vertikalrichtung des Vertikalträgers 118 einstellbar, um den Längsträger 54' seitlich und vertikal so exakt wie möglich zu positionieren, um die Laufradnabe 24' nach deren Lösung vom Motor des Gebläses 14' in Flucht mit der Rotorachse 32 des Gebläses 14' entlang des Längsträgers 54' verfahren zu können.

## Patentansprüche

1. Verfahren zur Demontage/Remontage von Rotorlagern eines Gebläses (14; 14') eines Windkanals (10) an Ort und Stelle des Gebläses (14; 14') innerhalb eines Kanalgehäuses (16) des Windkanals (10), wobei das Gebläse (14; 14') eine Rotorachse (32; 32') und eine Laufradnabe (24; 24') aufweist, wobei das Verfahren aufweist:
Anordnen zumindest eines horizontalen Längsträgers (56; 54') einer Verfahrvorrichtung (52; 52') für die Laufradnabe (24; 24'), wobei der Längsträger (56; 54') innerhalb des Kanalgehäuses (16) angeordnet wird und zur entlang des Längsträgers (56; 54') in Flucht mit der Rotorachse (32; 32') verfahrbaren Aufnahme der Laufradnabe (24; 24') ausgebildet ist, und Anordnen zumindest eines Stützgestells (66; 66') der Verfahrvorrichtung (52; 52') zum Stützen des zumindest einen Längsträgers (56; 54') an einem Fundament (34; 34') außerhalb des Kanalgehäuses (16), wobei sich das Stützgestell (66; 66') von dem zumindest einen Längsträger (56; 54') durch eine Wand des Kanalgehäuses (16) hindurch in einen Außenraum des Kanalgehäuses (16) erstreckt, um sich an dem Fundament (34; 34') außerhalb des Kanalgehäuses (16) abzustützen, und
Verfahren der Laufradnabe (24; 24') mittels zumindest eines an der Laufradnabe (24; 24') befestigten Lauforgans (62; 112) entlang des zumindest einen Längsträgers (56; 54'), um die Laufradnabe (24; 24') für die Demontage vom Gebläsemotor (28) zu entfernen oder für die Remontage zum Gebläsemotor (28) zurückzuführen.

2. Verfahren nach Anspruch 1, wobei die Verfahrvorrichtung (52) eine Mehrzahl an Längsträgern (54, 56, 58) aufweist, die horizontalinnerhalb des Kanalgehäuses (16) unter der Laufradnabe (24) angeordnet werden, wobei die Mehrzahl an Längsträgern (54, 56, 58) zur entlang der Längsträger (54, 56, 58) verfahrbaren Aufnahme der Laufradnabe (24) ausgebildet sind, wobei den Längsträgern (54, 56, 58) jeweils zumindest ein Lauforgan (60, 62, 64) zugeordnet ist.

3. Verfahren nach Anspruch 2, wobei die Längsträger (54, 56, 58) in Umfangsrichtung der Laufradnabe (24) verteilt angeordnet werden.

4. Verfahren nach Anspruch 2 oder 3, wobei die Verfahrvorrichtung (52) drei Längsträger (54, 56, 58) aufweist, von denen ein mittlerer Längsträger (56) mittig unter der Rotorachse (32) des Gebläses (14) und die beiden anderen Längsträger (54, 58) beidseits des mittleren Längsträgers (56) angeordnet werden.

5. Verfahren nach einem der Ansprüche 1 bis 4, wobei das Stützgestell (66) eine Mehrzahl an Vertikalträgern (70) zur Aufnahme des oder der Längsträger (54, 56, 58) aufweist, wobei sich die Vertikalträger (70) nach unten durch das Kanalgehäuse (16) hindurch erstrecken.

6. Verfahren nach Anspruch 5, wobei die Vertikalträger (70) eine Mehrzahl an ersten Vertikalträgern (72) aufweisen, und wobei das Stützgestell eine Mehrzahl an horizontalen Querträgern (78) aufweist, die innerhalb des Kanalgehäuses (16) quer zur Längsrichtung der Längsträger (54, 56, 58) angeordnet werden und zur Aufnahme der ersten Vertikalträger (72) ausgebildet sind, wobei die Vertikalträger (70) eine Mehrzahl an zweiten Vertikalträgern (74) aufweisen, die sich von den Querträgern (78) durch das Kanalgehäuse (16) hindurch erstrecken.

7. Verfahren nach Anspruch 6, wobei das Stützgestell (66) eine Mehrzahl an weiteren horizontalen Querträgern (80) aufweist, und wobei sich die Mehrzahl an zweiten Vertikalträgern (74) nach unten zu den weiteren Querträgern (80) erstrecken, und wobei die Vertikalträger (70) eine Mehrzahl an dritten Vertikalträgern (76) aufweisen, die sich von den weiteren Querträgern (80) nach unten erstrecken und auf dem Fundament (34) abstützen.

8. Verfahren nach einem der Ansprüche 2 bis 7, wobei die Verfahrvorrichtung (52) zumindest einen weiteren Längsträger (94) aufweist, der oberhalb der Rotorachse (32) angeordnet wird.

9. Verfahren nach Anspruch 1, wobei der zumindest eine Längsträger (54') über der Laufradnabe (24') angeordnet wird, und wobei das Stützgestell (66') zumindest einen Vertikalträger (118) zur Aufnahme des zumindest einen Längsträgers (54') aufweist, wobei sich der Vertikalträger (54') nach oben aus dem Kanalgehäuse heraus erstreckt, und wobei das Stützgestell (66') ein Portal zur Aufnahme des Vertikalträgers (54') und zum Abstützen an dem Fundament aufweist.

10. Verfahren nach einem der Ansprüche 1 bis 9, wobei eine Lage und/oder Position des zumindest einen Längsträgers (54; 54') justierbar, insbesondere fein justierbar ist.

11. Verfahren nach Anspruch 10, wobei die einstellbare Lage und/oder Position eine Neigung, eine Höhe und/oder eine horizontale Lage des Längsträgers (54; 54') quer zur Längsrichtung des Längsträgers (54; 54') ist.

12. Verfahren nach einem der Ansprüche 1 bis 11, wobei das zumindest eine Lauforgan (62; 112) zumindest eine Laufrolle, insbesondere eine Panzerrolle, oder eine Laufkatze, aufweist.

13. Verfahren nach einem der Ansprüche 1 bis 12, wobei das zumindest eine Lauforgan (62) eine Montageanschlussstelle (92) aufweist, die an eine Montageanschlussstelle (90) für ein Rotorblatt (26) des Gebläses (14) angepasst ist.

14. Verfahren nach einem der Ansprüche 1 bis 13, weiterhin mit Anordnen einer Zugvorrichtung (98) zum Wegziehen der Laufradnabe entlang des zumindest einen Querträgers.

15. Windkanal, der ein Kanalgehäuse (16) aufweist, mit einem in dem Kanalgehäuse (16) angeordneten Gebläse (14; 14'), das eine Rotorachse (32; 32') und eine Laufradnabe (24; 24') aufweist,
**dadurch gekennzeichnet, dass**
der Windkanal weiterhin ein Vorrichtung zum Durchführen des
Verfahrens nach eimem der Ansprüche 1-14 umfasst, wobei die Vorrichtung (50; 50') aufweist:
eine Verfahrvorrichtung (52; 52') für die Laufradnabe (24; 24'), wobei die Verfahrvorrichtung (52; 52') zumindest einen Längsträger (56; 54') zum horizontalen Anordnen innerhalb des Kanalgehäuses (16) in Längsrichtung des Kanalgehäuses (16) und zur entlang des Längsträgers (56; 54') in Flucht mit der Rotorachse (32; 32') verfahrbaren Aufnahme der Laufradnabe (24; 24') und zumindest ein Stützgestell (66; 66') zum Stützen des zumindest einen Längsträgers (56; 54') an einem Fundament (34; 34') außerhalb des Kanalgehäuses (16) aufweist, wobei das Stützgestell (66; 66') dazu ausgebildet ist, sich von dem zumindest einen Längsträger (56; 54') durch zumindest eine Öffnung (68) in einer Wand des Kanalgehäuses (16) hindurch in einen Außenraum des Kanalgehäuses (16) zu erstrecken, um sich an dem Fundament (34; 34') außerhalb des Kanalgehäuses (16) abzustützen, und wobei dem Längsträger (56; 54') zumindest ein Lauforgan (62; 112) zugeordnet ist, das einerseits an der Laufradnabe (24; 24') befestigbar und andererseits an dem Längsträger (56; 54') in dessen Längsrichtung verfahrbar ist.

## Claims

1. Method of disassembling/reassembling rotor bearings of a fan (14; 14') of a wind tunnel (10) in situ of the fan (14; 14') within a tunnel housing (16) of the wind tunnel (10), the fan (14; 14') comprising a rotor axle (32; 32') and an impeller hub (24; 24'), the method comprising:
arranging at least one horizontal longitudinal beam (56; 54') of a displacement device (52; 52') for the impeller hub (24; 24'), the longitudinal beam (56; 54') being arranged inside the tunnel housing (16) and being configured for receiving the impeller hub (24; 24') so as to be displaceable along the longitudinal beam (56; 54') in alignment with the rotor axis (32; 32'), and arranging at least one support frame (66; 66') of the displacement device (52; 52') for supporting the at least one longitudinal beam (56; 54') on a foundation (34; 34') outside the tunnel housing (16), the support frame (66; 66') extending from the at least one longitudinal beam (56; 54') through a wall of the tunnel housing (16) into an exterior of the tunnel housing (16) in order to be supported on the foundation (34; 34') outside the tunnel housing (16), and
displacing the impeller hub (24; 24') by means of at least one running member (62; 112) attached to the impeller hub (24; 24') along the at least one longitudinal member (56; 54') in order to remove the impeller hub (24; 24') from the fan motor (28) for disassembly or to return it to the fan motor (28) for reassembly.

2. Method according to claim 1, wherein the displacement device (52) has a plurality of longitudinal beams (54, 56, 58) which are arranged horizontally inside the tunnel housing (16) under the impeller hub (24), wherein the plurality of longitudinal beams (54, 56, 58) are configured for receiving the impeller hub (24) so as to be displaceable along the longitudinal beams (54, 56, 58), wherein at least one running member (60, 62, 64) is assigned to each of the longitudinal beams (54, 56, 58).

3. Method according to claim 2, wherein the longitudinal beams (54, 56, 58) are arranged distributed in the circumferential direction of the impeller hub (24).

4. Method according to claim 2 or 3, wherein the displacement device (52) has three longitudinal beams (54, 56, 58), of which a central longitudinal beam (56) is arranged centrally under the rotor axis (32) of the fan (14) and the other two longitudinal beams (54, 58) are arranged to both sides of the central longitudinal beam (56).

5. Method according to any one of claims 1 to 4, wherein the support frame (66) comprises a plurality of vertical beams (70) for receiving the longitudinal beam(s) (54, 56, 58), wherein the vertical beams (70) extend downwardly through the tunnel housing (16).

6. Method according to claim 5, wherein the vertical beams (70) comprise a plurality of first vertical beams (72), and wherein the support frame comprises a plurality of horizontal cross beams (78) which are arranged within the tunnel housing (16) transversely to the longitudinal direction of the longitudinal beams (54, 56, 58) and adapted to receive the first vertical beams (72), the vertical beams (70) having a plurality of second vertical beams (74) extending from the cross beams (78) through the tunnel housing (16).

7. Method according to claim 6, wherein the support frame (66) comprises a plurality of further horizontal cross beams (80), and wherein the plurality of second vertical beams (74) extend downwardly to the further cross beams (80), and wherein the vertical beams (70) comprise a plurality of third vertical beams (76) extending downwardly from the further cross beams (80) and supported on the foundation (34).

8. Method according to any one of claims 2 to 7, wherein the displacement device (52) comprises at least one further longitudinal beam (94) which is arranged above the rotor axis (32).

9. Method according to claim 1, wherein the at least one longitudinal beam (54') is arranged above the impeller hub (24'), and wherein the support frame (66') comprises at least one vertical beam (118) for receiving the at least one longitudinal beam (54'), wherein the vertical beam (54') extends upwards out of the tunnel housing, and wherein the support frame (66') comprises a portal for receiving the vertical beam (54') and for supporting on the foundation.

10. Method according to any one of claims 1 to 9, wherein a posture and/or position of the at least one longitudinal beam (54; 54') is adjustable, in particular finely adjustable.

11. Method according to claim 10, wherein the adjustable posture and/or position is an inclination, a height and/or a horizontal orientation of the longitudinal beam (54; 54') transverse to the longitudinal direction of the longitudinal beam (54; 54').

12. Method according to any one of claims 1 to 11, wherein the at least one running member (62; 112) comprises at least one running roller, in particular an armored roller, or a trolley.

13. Method according to any one of claims 1 to 12, wherein the at least one running member (62) comprises a mounting connection point (92) adapted to a mounting connection point (90) for a rotor blade (26) of the fan (14).

14. Method according to any one of claims 1 to 13, further comprising arranging a pulling device (98) for pulling the impeller hub away along the at least one longitudinal beam.

15. Wind tunnel having a tunnel housing (16) and comprising a fan (14; 14') arranged in the tunnel housing (16), which fan has a rotor axis (32; 32') and an impeller hub (24; 24'), **characterized in that** the wind tunnel comprises a device for carrying out the method according to any one of claims 1 - 14, wherein the device (50; 50') comprises:
a displacement device (52; 52') for the impeller hub (24; 24'), the displacement device (52; 52') comprising at least one longitudinal beam (56; 54') for horizontal arrangement within the tunnel housing (16) in the longitudinal direction of the tunnel housing (16) and for receiving the impeller hub (24; 24') so as to be displaceable along the longitudinal beam (56; 54') in alignment with the rotor axis (32; 32'), and at least one support frame (66; 66') for supporting the at least one longitudinal beam (56; 54'); 54') on a foundation (34; 34') outside the tunnel housing (16), wherein the support frame (66; 66') is configured to extend from the at least one longitudinal beam (56; 54') through at least one opening (68) in a wall of the tunnel housing (16) into an exterior of the tunnel housing (16), in order to be supported on the foundation (34; 34') outside the tunnel housing (16; 34'), and wherein at least one running member (62; 112) is assigned to the longitudinal beam (56; 54'), which running member can be fastened on the one hand to the impeller hub (24; 24') and on the other hand can be displaced on the longitudinal beam (56; 54') in the longitudinal direction thereof.

## Revendications

1. Procédé de démontage/remontage de paliers de rotor d'une soufflante (14 ; 14') d'un tunnel aérodynamique (10) in situ de la soufflante (14 ; 14') à l'intérieur d'un carter de tunnel (16) du tunnel aérodynamique (10), dans lequel la soufflante (14 ; 14') présente un axe de rotor (32 ; 32') et un moyeu de roue à aubes (24 ; 24'), dans lequel le procédé présente :
l'agencement d'au moins un support longitudinal (56 ; 54') horizontal d'un dispositif de déplacement (52 ; 52') pour le moyeu de roue à aubes (24 ; 24'), dans lequel le support longitudinal (56 ; 54') est agencé à l'intérieur du carter de tunnel (16) et est réalisé pour recevoir de manière mobile le moyeu de roue à aubes (24 ; 24') en alignement avec l'axe de rotor (32 ; 32') le long du support longitudinal (56 ; 54'), et l'agencement d'au moins un châssis de soutien (66 ; 66') du dispositif de déplacement (52 ; 52') destiné à soutenir l'au moins un support longitudinal (56 ; 54') sur un socle (34 ; 34') à l'extérieur du carter de tunnel (16), dans lequel le châssis de soutien (66 ; 66') s'étend dans un espace extérieur du carter de tunnel (16) à travers une paroi du carter de tunnel (16) de part en part depuis l'au moins un support longitudinal (56 ; 54') pour prendre appui sur le socle (34 ; 34') à l'extérieur du carter de tunnel (16), et
le déplacement du moyeu de roue à aubes (24 ; 24') au moyen d'au moins un organe de roulement (62 ; 112) fixé sur le moyeu de roue à aubes (24 ; 24') le long de l'au moins un support longitudinal (56 ; 54') pour retirer le moyeu de roue à aubes (24 ; 24') du moteur de soufflante (28) pour le démontage ou pour le ramener au moteur de soufflante (28) pour le remontage.

2. Procédé selon la revendication 1, dans lequel le dispositif de déplacement (52) présente une multitude de supports longitudinaux (54, 56, 58), qui sont agencés sous le moyeu de roue à aubes (24) horizontalement à l'intérieur du carter de tunnel (16), dans lequel la multitude de supports longitudinaux (54, 56, 58) sont réalisés pour recevoir le moyeu de roue à aubes (24) de manière mobile le long des supports longitudinaux (54, 56, 58), dans lequel respectivement au moins un organe de roulement (60, 62, 64) est associé aux supports longitudinaux (54, 56, 58).

3. Procédé selon la revendication 2, dans lequel les supports longitudinaux (54, 56, 58) sont agencés de manière répartie dans la direction périphérique du moyeu de roue à aubes (24).

4. Procédé selon la revendication 2 ou 3, dans lequel le dispositif de déplacement (52) présente trois supports longitudinaux (54, 56, 58), parmi lesquels un support longitudinal central (56) est agencé au centre sous l'axe de rotor (32) de la soufflante (14) et les deux autres supports longitudinaux (54, 58) sont agencés de part et d'autre du support longitudinal central (56).

5. Procédé selon l'une quelconque des revendications 1 à 4, dans lequel le châssis de soutien (66) présente une multitude de supports verticaux (70) destinés à recevoir le ou les supports longitudinaux (54, 56, 58), dans lequel les supports verticaux (70) s'étendent à travers le carter de tunnel (16) de part en part vers le bas.

6. Procédé selon la revendication 5, dans lequel les supports verticaux (70) présentent une multitude de premiers supports verticaux (72), et dans lequel le châssis de soutien présente une multitude de supports transversaux (78) horizontaux, qui sont agencés à l'intérieur du carter de tunnel (16) de manière transversale par rapport à la direction longitudinale des supports longitudinaux (54, 56, 58) et sont réalisés pour recevoir les premiers supports verticaux (72), dans lequel les supports verticaux (70) présentent une multitude de deuxièmes supports verticaux (74), qui s'étendent à travers le carter de tunnel (16) de part en part depuis les supports transversaux (78).

7. Procédé selon la revendication 6, dans lequel le châssis de soutien (66) présente une multitude d'autres supports transversaux (80) horizontaux, et dans lequel la multitude de deuxièmes supports verticaux (74) s'étendent vers les autres supports transversaux (80) vers le bas, et dans lequel les supports verticaux (70) présentent une multitude de troisièmes supports verticaux (76), qui s'étendent vers le bas depuis les autres supports transversaux (80) et prennent appui sur le socle (34).

8. Procédé selon l'une quelconque des revendications 2 à 7, dans lequel le dispositif de déplacement (52) présente au moins un autre support longitudinal (94), qui est agencé au-dessus de l'axe de rotor (32).

9. Procédé selon la revendication 1, dans lequel l'au moins un support longitudinal (54') est agencé au-dessus du moyeu de roue à aubes (24'), et dans lequel le châssis de soutien (66') présente au moins un support vertical (118) destiné à recevoir l'au moins un support longitudinal (54'), dans lequel le support vertical (54') s'étend hors du carter de tunnel vers le haut, et dans lequel le châssis de soutien (66') présente un portique destiné à recevoir le support vertical (54') et destiné à prendre appui sur le socle.

10. Procédé selon l'une quelconque des revendications 1 à 9, dans lequel un emplacement et/ou une position de l'au moins un support longitudinal (54 ; 54') peuvent être ajustés, en particulier peuvent être ajustés avec précision.

11. Procédé selon la revendication 10, dans lequel l'emplacement et/ou la position réglables sont une inclinaison, une hauteur et/ou un emplacement horizontal du support longitudinal (54 ; 54') de manière transversale à la direction longitudinale du support longitudinal (54 ; 54').

12. Procédé selon l'une quelconque des revendications 1 à 11, dans lequel l'au moins un organe de roulement (62 ; 112) présente au moins une roulette de roulement, en particulier une roulette blindée pour charges très lourdes, ou un chariot roulant.

13. Procédé selon l'une quelconque des revendications 1 à 12, dans lequel l'au moins un organe de roulement (62) présente un point de raccordement de montage (92), qui est adapté au point de raccordement de montage (90) pour une pale de rotor (26) de la soufflante (14).

14. Procédé selon l'une quelconque des revendications 1 à 13, par ailleurs avec l'agencement d'un dispositif de traction (98) destiné à tirer le moyeu de roue à aubes le long de l'au moins un support transversal pour l'enlever.

15. Tunnel aérodynamique, qui présente un carter de tunnel (16), avec une soufflante (14 ; 14') agencée dans le carter de tunnel (16), qui présente un axe de rotor (32 ; 32') et un moyeu de roue à aubes (24 ; 24'),
**caractérisé en ce que**
le tunnel aérodynamique comprend par ailleurs un dispositif de mise en oeuvre du procédé selon l'une quelconque des revendications 1-14,
dans lequel le dispositif (50 ; 50') présente :
un dispositif de déplacement (52 ; 52') pour le moyeu de roue à aubes (24 ; 24'), dans lequel le dispositif de déplacement (52 ; 52') présente au moins un support longitudinal (56 ; 54') destiné à être agencé horizontalement à l'intérieur du carter de tunnel (16) dans la direction longitudinale du carter de tunnel (16) et destiné à recevoir le moyeu de roue à aubes (24 ; 24') de manière mobile en alignement avec l'axe de rotor (32 ; 32') le long du support longitudinal (56 ; 54') et au moins un châssis de soutien (66 ; 66') destiné à soutenir l'au moins un support longitudinal (56 ; 54') sur un socle (34 ; 34') à l'extérieur du carter de tunnel (16), dans lequel le châssis de soutien (66 ; 66') est réalisé pour s'étendre dans un espace extérieur du carter de tunnel (16) à travers au moins une ouverture (68) dans une paroi du carter de tunnel (16) de part en part depuis l'au moins un support longitudinal (56 ; 54') pour prendre appui sur le socle (34 ; 34') à l'extérieur du carter de tunnel (16), et dans lequel est associé au support longitudinal (56 ; 54') au moins un organe de roulement (62 ; 112), qui peut être fixé d'une part sur le moyeu de roue à aubes (24 ; 24') et peut être déplacé d'autre part sur le support longitudinal (56 ; 54') dans sa direction longitudinale.
